# EUROPEAN PATENT APPLICATION

(11) **EP 4 848 128 A1**
(43) Date of publication of application: **02.12.2026**
(21) Application number: 26174665.5
(22) Date of filing: 27.04.2026
(51) Int. Cl.: G06F 21/62, G06F 16/36, G06F 16/901, G06F 40/30, G06N 5/04, G06N 5/022, G06N 20/00, H04L 9/40, H04W 12/02, G06F 9/54, G06F 40/35

(54) **INFORMATION PROCESSING APPARATUS, ANONYMIZING PROGRAM, AND ANONYMIZING METHOD**

(30) Priority: 30.05.2025 JP 2025090989
(71) Applicant: FUJITSU LIMITED, Kawasaki-shi, Kanagawa 211-8588 (JP)
(72) Inventor: KAWANO, Miho, Kawasaki-shi, Kanagawa, 211-8588 (JP)
(74) Representative: Hoffmann Eitle

(57) **Abstract**

An information processing apparatus includes a controller (150) configured to generate, based on information exchanged between an internal Agent and an external Agent, a context graph where a plurality of elements in the information and relationships between the elements are represented by a graph structure identify unknown elements and known elements to the external Agent among elements of previously designated confidential information based on the context graph determine an anonymization range based on the unknown elements and the known elements to the external Agent and anonymize anonymization target information based on the anonymization range to generate anonymized information, and transmitting the anonymized information to the external Agent.

## Description

### FIELD

The embodiments discussed herein are related to an information processing apparatus and the like.

### BACKGROUND

A user belonging to one department in a company delegates a task to an AI Agent (hereinafter, referred to as the Agent) and acquires an execution result from the Agent to optimize business.

For example, the Agent divides a task given in a natural language text into a plurality of subtasks using a large language model (LLM), and delegates the subtasks to other Agents depending on abilities such as a usable tool and data. By repeatedly executing the above-described process, the Agent resolves the plurality of subtasks and resolves the task designated by the user.

In addition, disclosed is a technique of cooperating with a Proxy Agent (hereinafter, referred to as PA) such that an Agent positioned on the same host as the PA delegates a subtask to an Agent on a different host regardless of whether the host is Local or Remote. The hosts are managed by different departments, and there is a restriction in that it is difficult to disclose all the confidential information to the different departments.

During the task delegation from the Local-side Agent to the Remote-side Agent, an example regarding the confidential information corresponds to a case of delegating a review of a material or code or generation of a related document. For example, the review of the material may include excessively detailed confidential information that is not directly related to the gist. The review of the development code may include information from which individual company environments or a client who delegates the development can be estimated.

Another example regarding the confidential information corresponds to a case of providing information for resolving a task of the Local-side Agent to the Remote-side Agent such that the Remote-side Agent provides information and analysis results depending on specialties.

In order to prevent leakage of the above-described confidential information, the confidential information is anonymized when the information is transmitted from the Local-side Agent to the Remote-side Agent. For example, in the related art regarding the anonymization of the confidential information, identification and anonymization focusing on personal information are key factors.

In the related art, personal identifiable information (PII) in a text to be transmitted to the counterpart is identified, and only a position corresponding to the PII is set with a mask to be anonymized. Attributes of the information corresponding to the PII are a name, an address, an income, a uniform resource identifier (URI) corresponding to an environment, a key and an access token, and the like, and are previously defined. A technique of identifying the PII using the LLM or an existing method such as machine learning is disclosed.
Patent Literature 1: Japanese Laid-open Patent Publication No. H6-096047
Patent Literature 2: Japanese Patent No. 7586561
Patent Literature 3: U.S. Patent Application Publication No.2023/0139927
Patent Literature 4: U.S. Patent Application Publication No.2020/0065625

However, when information is exchanged between the Local-side Agent and the Remote-side Agent to resolve a task, Elements configuring the confidential information are dispersed into output information of the Local-side Agent and output information of the Remote-side Agent. In this case, the confidential information of the Local-side Agent and the confidential information of the Remote-side Agent are confused, and there is a case where configuration information from which the confidential information can be estimated may be leaked.

Accordingly, it is an object in one aspect of an embodiment of the invention to provide an information processing apparatus, an anonymizing program, and an anonymizing method capable of delegating a part of processes to a Remote side without giving too much element information to estimate confidential information.

### SUMMARY

According to an aspect of an embodiment, an information processing apparatus includes a controller (150) configured to generate, based on information exchanged between an internal Agent and an external Agent, a context graph where a plurality of elements in the information and relationships between the elements are represented by a graph structure identify unknown elements and known elements to the external Agent among elements of previously designated confidential information based on the context graph determine an anonymization range based on the unknown elements and the known elements to the external Agent and anonymize anonymization target information based on the anonymization range to generate anonymized information, and transmitting the anonymized information to the external Agent.

### BRIEF DESCRIPTION OF DRAWINGS

FIG. 1 is a diagram for supplementary description of a problem in the related art;
FIG. 2 is a diagram illustrating a configuration example of a system according to the present embodiment;
FIG. 3 is a flowchart illustrating a procedure of a confidential information protection process;
FIG. 4 is a diagram illustrating an example of a prompt corresponding to F1;
FIG. 5 is a diagram illustrating an example of a context graph;
FIG. 6 is a diagram illustrating an example of a prompt corresponding to F2;
FIG. 7 is a diagram illustrating an execution example of the prompt corresponding to F2;
FIG. 8 is a diagram illustrating an example of a context graph B_{lo,t=0};
FIG. 9 is a diagram illustrating a relationship between context graphs B_{lo,t=0} and B_{re,t=0};
FIG. 10 is a diagram for supplementary description of a process (t=0) of identifying a confidential range and a disclosure status;
FIG. 11 is a diagram illustrating an example of a prompt corresponding to F4;
FIG. 12 is a diagram illustrating an example of a prompt corresponding to F5;
FIG. 13 is a diagram illustrating an example of a prompt corresponding to F6;
FIG. 14 is a diagram illustrating an example of a prompt corresponding to F7;
FIG. 15 is a diagram illustrating an example of a prompt corresponding to F8;
FIG. 16 is a diagram for supplementary description of a process of a Remote host;
FIG. 17 is a diagram illustrating a relationship between context graphs B_{lo,t=1}, B_{re,t=1}, and E_{se,t=0};
FIG. 18 is a diagram for supplementary description of a process (t=1) of identifying a confidential range and a disclosure status;
FIG. 19 is a diagram for supplementary description of a process of determining a disclosure range;
FIG. 20 is a flowchart illustrating a procedure of a process of generating and updating a context graph;
FIG. 21 is a flowchart illustrating a procedure of a process of identifying a confidential range and a disclosure status;
FIG. 22 is a flowchart (1) illustrating a procedure of a process of determining a disclosure range;
FIG. 23 is a flowchart (2) illustrating a procedure of the process of determining the disclosure range;
FIG. 24 is a functional block diagram illustrating a configuration of a Local host according to the present embodiment;
FIG. 25 is a flowchart illustrating an example of a procedure of the Local host according to the present embodiment;
FIG. 26 is a diagram illustrating an example of a data structure of a context graph; and
FIG. 27 is a diagram illustrating an example of a hardware configuration of a computer that implements the same functions as the Local host according to the present embodiment.

### DESCRIPTION OF EMBODIMENT(S)

Preferred embodiments of the present invention will be explained with reference to accompanying drawings. It is noted that the present invention is not limited to this embodiment.

Before describing the present embodiment, confidential information leakage that is assumed in the present embodiment will be described. Confidential information including personal information that is previously designated by a user and is desired to be anonymized for business purposes is configured with a combinations of one or more descriptions regarding the confidential information (elements configuring the confidential information).

Each of the elements configuring the confidential information is not necessarily confidential information. However, a situation where the confidential information can be estimated by an LLM by combining specific descriptions is assumed as leakage of the confidential information.

For example, it is assumed to describe a situation while hiding information of a third person (for example, a collaborative experiment for students in a laboratory of XXX university). At this time, when a Local-side Agent transmits elements of "laboratory", "XXX campus", "professor XXX", and "expert of XXX field" to a Remote-side Agent while the Remote-side Agent reviews an experimental configuration, the Remote-side Agent can estimate the information of the above-described third person, and the confidential information is leaked.

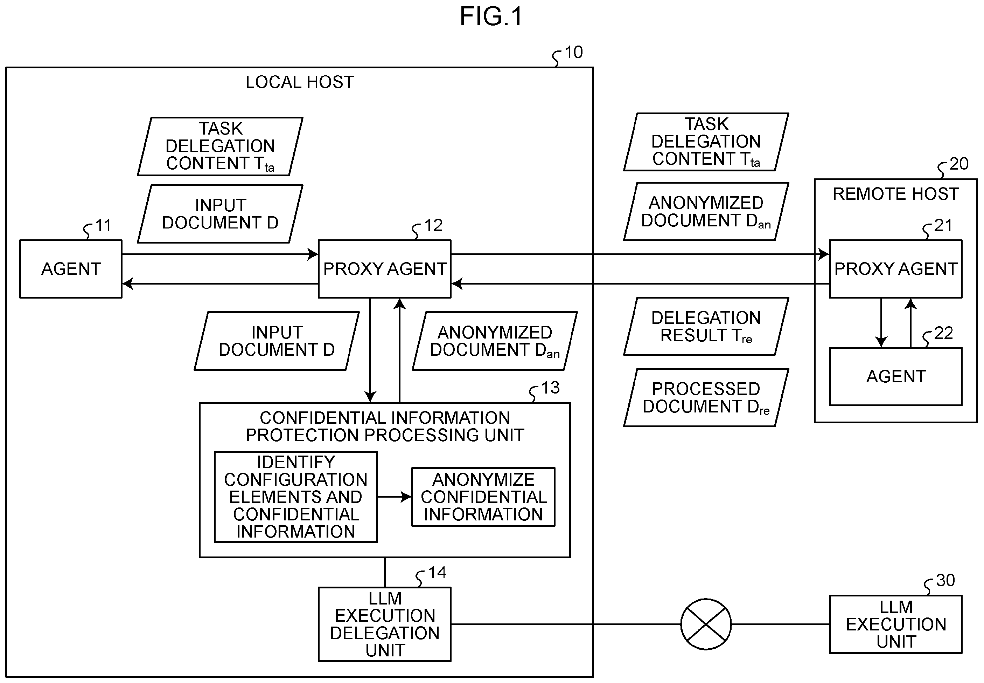

Next, the supplementary description for the problem of the related art will be given. FIG. 1 is a diagram for the supplementary description of the problem in the related art. The example illustrated in FIG. 1 illustrates a Local host 10, a Remote host 20, and an LLM execution unit 30. The Local host 10 is connected to the Remote host 20 and the LLM execution unit 30 via a network.

The Local host 10 includes an Agent 11, a Proxy Agent 12, a confidential information protection processing unit 13, and an LLM execution delegation unit 14. The Agent 11 receives an input document D, and executes a task that is delegated by a user. For example, the Agent 11 divides the task into a plurality of subtasks, and outputs the input document D and a task delegation content Tₜₐ regarding one subtask to the Proxy Agent 12.

Here, it can be said that the input document D and the task delegation content Tₜₐ output from the Agent 11 to the Proxy Agent 12 are texts including confidential information.

The Proxy Agent 12 outputs the input document D to the confidential information protection processing unit 13. The confidential information protection processing unit 13 executes a confidential information protection process on the input document D in cooperation with the LLM execution delegation unit 14 to generate an anonymized document Dₐₙ. The confidential information protection processing unit 13 outputs the anonymized document Dₐₙ to the Proxy Agent 12.

The LLM execution delegation unit 14 provides an LLM execution environment to the confidential information protection processing unit 13 in cooperation with the LLM execution unit 30. The LLM execution delegation unit 14 transmits a prompt and information of an execution target to the LLM execution unit 30. The LLM execution unit 30 is a server or the like that actually operates the LLM. The LLM execution unit 30 executes a process instructed by the prompt, and transmits the execution result to the LLM execution delegation unit 14.

The Proxy Agent 12 transmits the task delegation content Tₜₐ and the anonymized document Dₐₙ to the Remote host 20. The Remote host 20 includes a Proxy Agent 21 and an Agent 22.

The Proxy Agent 21 outputs the task delegation content Tₜₐ and the anonymized document Dₐₙ to the Agent 22. The Agent 22 generates a delegation result Tᵣₑ and a processed document Dᵣₑ based on the task delegation content Tₜₐ and the anonymized document Dₐₙ, and outputs the delegation result Tᵣₑ and the processed document Dᵣₑ to the Proxy Agent 21. The Proxy Agent 21 transmits the delegation result Tᵣₑ and the processed document Dᵣₑ to the Local host 10.

By repeatedly executing the above-described process with the Agent 22 of the Remote host 20 until the process of each subtask is completed, the Agent 11 of the Local host 10 resolves the task, and notifies the execution result of the task to the user.

While Agent 11 of the Local host 10 and the Agent 22 of the Remote host 20 are repeatedly executing the above-described process, The confidential information protection processing unit 13 may confuse information known to the Agent 11 and information known to the Agent 22. In this case, the confidential information protection processing unit 13 may generate the anonymized document Dₐₙ in a state where element information from which the Remote host 20 can estimate the confidential information remains, which leads to information leakage.

For example, it is assumed that the designated confidential information is "a collaborative research with ∘yama laboratory of XXX university". In this case, the element information from which the confidential information can be estimated includes elements indicated by <> in texts "is performed on a campus of <the faculty of information science and technology>" and "is for students of <data science course>". In addition, the element information from which the confidential information can be estimated includes elements indicated by <> in texts "data was configured in collaboration with a leading <university professor> in the XXX field" and "an application that displays local information in <∘∘ prefecture> was prepared". Each of the elements in the above-described element information "the faculty of information science and technology", "data science course", "university professor", and "∘∘ prefecture" does not correspond to the PII. However, the university, the area, and the specialty regarding the confidential information can be estimated from each element information.

It is noted that a text not including the element information from which the confidential information can be estimated is, for example, "the present experiment was performed in collaboration with the laboratory of Professor ∘yama at XXX university".

Hereinabove, the supplementary description for the confidential information leakage assumed in the present embodiment and the problem of the related art has been given.

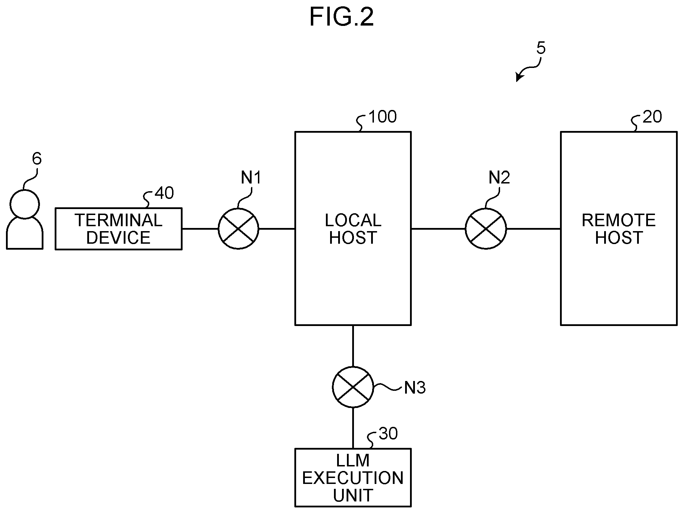

Next, an example of a system according to the present embodiment will be described. FIG. 2 is a diagram illustrating a configuration example of the system according to the present embodiment. As illustrated in FIG. 2, a system 5 according to the present embodiment includes the Remote host 20, the LLM execution unit 30, a terminal device 40, and a Local host 100. The Local host 100 is an example of "information processing apparatus".

For example, the terminal device 40 and the Local host 100 are connected to each other via a network N1. The Local host 100 and the Remote host 20 are connected to each other via a network N2. The Local host 100 and the LLM execution unit 30 are connected to each other via a network N3.

Description regarding the Remote host 20 and the LLM execution unit 30 is the same as the description regarding the Remote host 20 and the LLM execution unit 30 given with reference to FIG. 1.

The terminal device 40 is used by a user 6, and examples thereof include a personal computer (PC), a laptop PC, a tablet terminal, and a smartphone. In the terminal device 40, a browser application is installed. The user 6 accesses the Local host 100 using the browser application of the terminal device 40 to input the input document D and the task. When the execution result of the task is acquired from the Local host 100, the terminal device 40 displays the execution result. In addition, the user 6 may designate the confidential information.

Based on information exchanged between an internal Agent and an external Agent, the Local host 100 generates a context graph where a plurality of elements in the information and relationships between the elements are represented by a graph structure. The internal Agent is the Agent of the Local host 100. The external Agent is the Agent of the Remote host 20. The Local host 100 identifies unknown elements and known elements to the external Agent among elements of previously designated confidential information based on the context graph, determines an anonymization range based on the unknown elements and the known elements to the external Agent, and anonymizes anonymization target information based on the anonymization range to generate anonymized information.

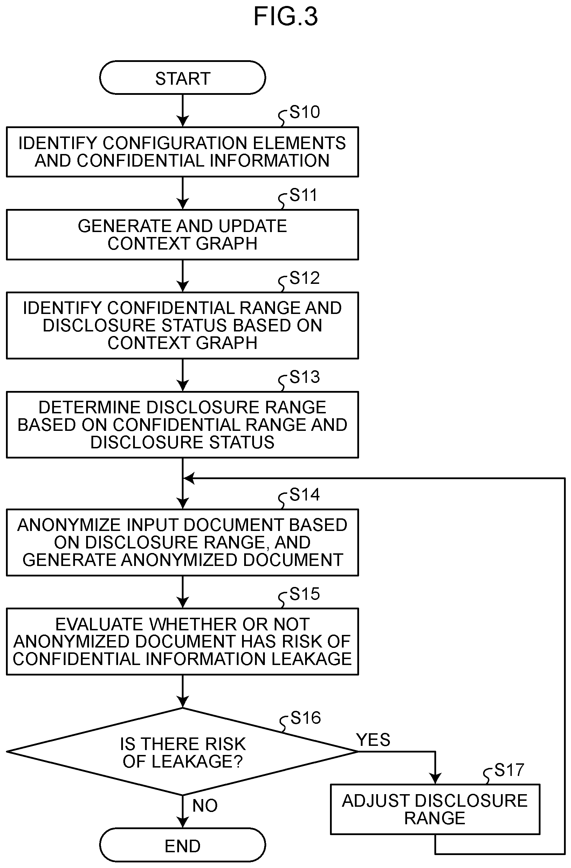

For example, when the input document D and the task are received from the terminal device 40, the Local host 100 exchanges information with the Remote host 20 to execute the task, and transmits the execution result to the terminal device 40. When the input document D is transmitted to the Remote host 20, the Local host 100 executes the confidential information protection process illustrated in FIG. 3 to anonymize the input document D.

FIG. 3 is a flowchart illustrating a procedure of the confidential information protection process. As illustrated in FIG. 3, the Local host 100 identifies the confidential information and configuration elements (Step S10). The Local host 100 generates and updates the context graph (Step S11).

The Local host 100 identifies a confidential range and a disclosure status based on the context graph (Step S12). The Local host 100 determines a disclosure range based on the confidential range and the disclosure status (Step S13).

The Local host 100 anonymizes the input document D based on the disclosure range to generate the anonymized document Dₐₙ (Step S14). The Local host 100 evaluates whether or not the anonymized document Dₐₙ has a risk of confidential information leakage (Step S15). When there is no risk of confidential information leakage (Step S16, No), the Local host 100 ends the confidential information protection process.

On the other hand, when there is the risk of confidential information leakage (Step S16, Yes), the Local host 100 adjusts the disclosure range (Step S17) and proceeds to Step S14.

As described above, the Local host 100 evaluates whether or not the anonymized document Dₐₙ obtained by anonymizing the input document D has a risk of confidential information leakage. When there is the risk of confidential information leakage, the Local host 100 adjusts the disclosure range and repeatedly executes the process of generating the anonymized document Dₐₙ again until the risk of confidential information leakage is resolved such that the confidential information can be prevented from being leaked.

Next, the process described in each step of FIG. 3 will be described in more detail. "t" described below represents the number of steps of exchange with the Remote host 20. The initial value of t is 0.

It is noted that the Agent that is operated by the Local host 100 may also be referred to as the Local-side Agent. The Agent that is operated by the Remote host 20 may also be referred to as the Remote-side Agent. The Local-side Agent and the Remote-side Agent may also be referred to as a Local/Remote-side Agents. Data exchange between the Local-side Agent and the Remote-side Agent may also be referred to as a conversation between the Local-side Agent and the Remote-side Agent.

In the following description, the process described in each step of FIG. 3 where t=0 will be described in more detail. t=0 represents a state where the Local-side Agent does not transmit information even once to the Remote-side Agent.

First, the process (t=0) of identifying the confidential information and the configuration elements described in Step S10 of FIG. 3 will be described in more detail. This process is a process of extracting a text that can configure the confidential information using LLM based on an input document, an utterance of the Local-side Agent, and the like. When t > 0, a response or the like from the Remote host 20 is also considered.

The Local host 100 identifies a sentence (text T_{se,t}) regarding confidential information (also referred to as a criterion for confidential information leakage) Tᵢₙ assumed by a user from an input document Dₜ input from the user and an utterance T_{me,t} of the Local-side Agent. For example, the Local host 100 identifies the text T_{se,t} using Formula (1).

In the following description, the input document Dₜ may also be simply referred to as "Dt", the utterance T_{me,t} of the Local-side Agent may also be simply referred to as "T_{me,t}", the confidential information (also referred to as the criterion for the confidential information leakage) Tᵢₙ may also be simply referred to as "Tᵢₙ", and the text T_{se,t} may also be simply referred to as "T_{se,t}".${T}_{se , t} = F 1 \left({D}_{t}, {T}_{in}\right) + F 1 \left({T}_{me , t}, {T}_{in}\right)$ (1)

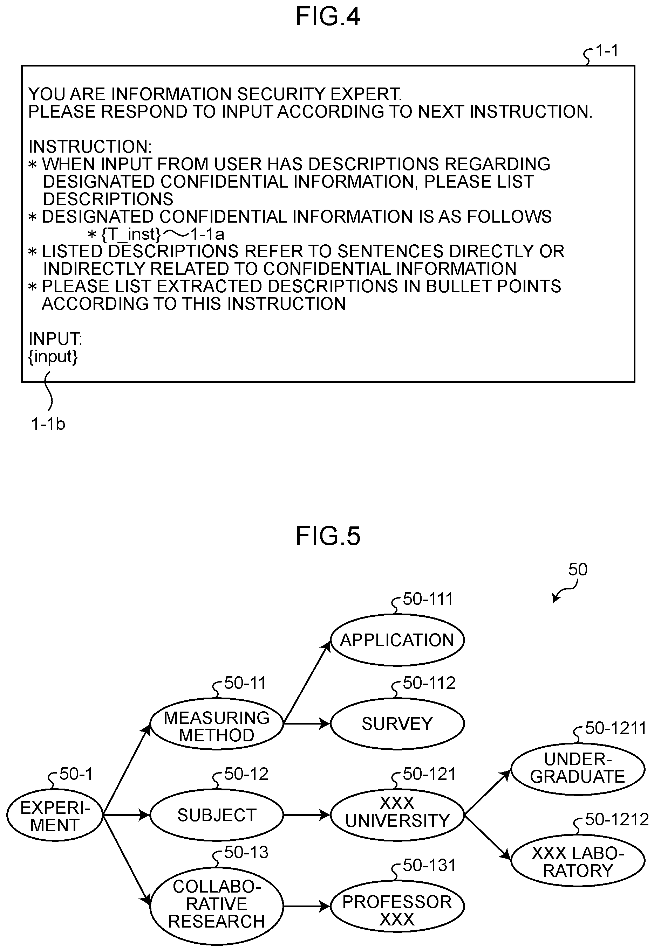

F1() is a function for extracting a sentence including the configuration information of the confidential information in the text based on an instruction regarding the confidential information from the user. For example, the Local host 100 may acquire the text of F1(Dₜ,Tᵢₙ) and the text of F1(T_{me,t},Tᵢₙ) by inputting a prompt 1-1 illustrated in FIG. 4 to the LLM execution unit 30.

FIG. 4 is a diagram illustrating an example of a prompt corresponding to F1. For example, the Local host 100 obtains F1(Dₜ,Tᵢₙ) by setting the confidential information Tᵢₙ to an area 1-1a of the prompt 1-1, setting Dₜ to an area 1-1b, and inputting the prompt to the LLM execution unit 30. The Local host 100 obtains F1(Dₜ,T_{me,t}) by setting the confidential information Tᵢₙ to the area 1-1a of the prompt 1-1, setting T_{me,t} to the area 1-1b, and inputting the prompt to the LLM execution unit 30.

Next, the process (t=0) regarding the generation and update of the context graph described in Step S11 of FIG. 3 will be described in more detail. Here, the context graph is a graph where a structure of a conversation or document is represented by connecting a plurality of nodes with edges, in which abstraction levels of topics are represented by hierarchical relationships. The node of the context graph corresponds to a topic or keyword.

FIG. 5 is a diagram illustrating an example of the context graph. A context graph 50 illustrated in FIG. 5 includes nodes 50-1, 50-11, 50-111, 50-112, 50-12, 50-121, 50-1211, 50-1212, 50-13, and 50-131. Nodes having a causal relationship are connected with edges. Each of the nodes corresponds to a keyword or topic extracted from one document. For example, a node closer to the node 50-1 has a higher abstraction level, and a node farther from the node 50-1 has a lower abstraction level.

Whenever the input document Dₜ input from the user and the conversation between the Local-side Agent and the Remote-side Agent progress, the Local host 100 generates (updates) a context graph B regarding the information of the Local/Remote-side Agents. A context graph of the Local-side Agent is represented by Bₗₒ, and a context graph of the Remote-side Agent is represented by Bᵣₑ. At a stage of t=0, a response from the Remote-side Agent is not obtained. Therefore, as described below, the context graph Bᵣₑ is Null.

The Local host 100 generates (updates) a context graph B_{lo,t} using Formula (2). F2 () is a function for outputting topics in the input document as a graph having a hierarchical structure. When t=0, the value of B_{lo,t-1} is Null.${B}_{lo , t} = F 2 \left({D}_{t}+{T}_{me , t}\right) ∪ {B}_{lo , t - 1}$ (2)

The Local host 100 generates (updates) a context graph B_{re,t} using Formula (3). T_{re,t} of Formula (3) is a text that is disclosed in advance from the Remote-side Agent or is disclosed through a conversation. When t=0, the value of B_{re,t-1} is Null.${B}_{re , t} = F 2 \left({T}_{re , t}\right) ∪ {B}_{re , t - 1}$ (3)

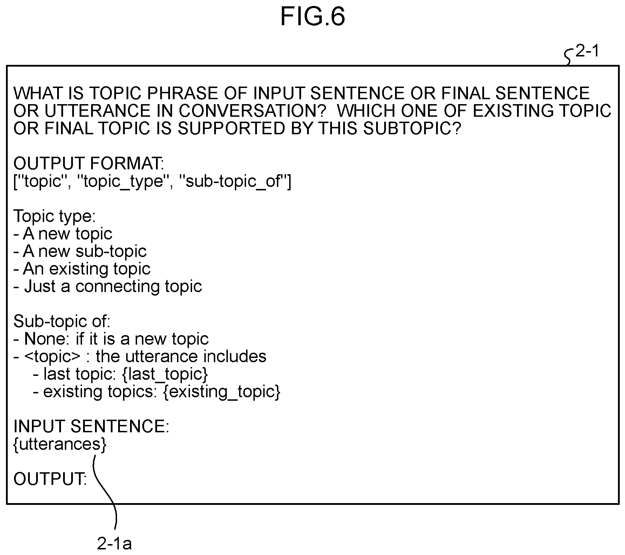

The Local host 100 may acquire the context graphs Bₗₒ and Bᵣₑ by inputting a prompt 2-1 illustrated in FIG. 6 to the LLM execution unit 30.

FIG. 6 is a diagram illustrating an example of a prompt corresponding to F2. For example, the Local host 100 obtains F2 (Dₜ+T_{me,t}) by setting Dₜ+T_{me,t} to an area 2-1a of the prompt 2-1 and inputting the prompt to the LLM execution unit 30. The Local host 100 obtains F2 (T_{re,t} ) by setting T_{re,t} to the area 2-1a of the prompt 2-1 and inputting the prompt to the LLM execution unit 30.

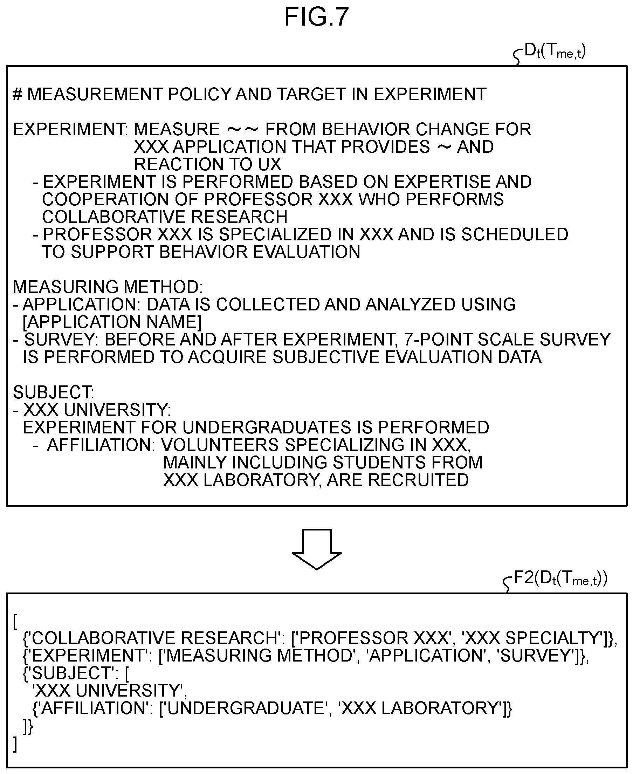

FIG. 7 is a diagram illustrating an execution example of the prompt corresponding to F2. For example, the Local host 100 obtains F2(Dₜ(T_{me,t})) by setting the input document Dₜ (or T_{me,t}) to the area 2-1a of the prompt 2-1 and inputting the prompt to the LLM execution unit 30. For example, F2(Dₜ(T_{me,t})) of FIG. 7 corresponds to the context graph 50 described with reference to FIG. 5.

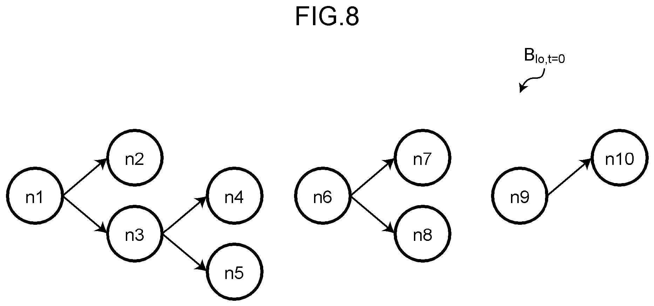

Here, for convenience of description, it is assumed that the context graph B_{lo,t=0} is the context graph illustrated in FIG. 8. FIG. 8 is a diagram illustrating an example of a context graph B_{lo,t=0}. As illustrated in FIG. 8 the context graph B_{lo,t=0} includes nodes n1, n2, n3, n4, n5, n6, n7, n8, n9, and n10, which means that 10 topics are included. An edge of the node n1 is directed to the node n2, which means that a topic of the node n2 is a more specific topic of the topic of the node n1.

Although the context graph B_{re,t=0} is not illustrated, it is assumed that the context graph B_{re,t=0} includes nodes n1, n2, n3, n11, and n12.

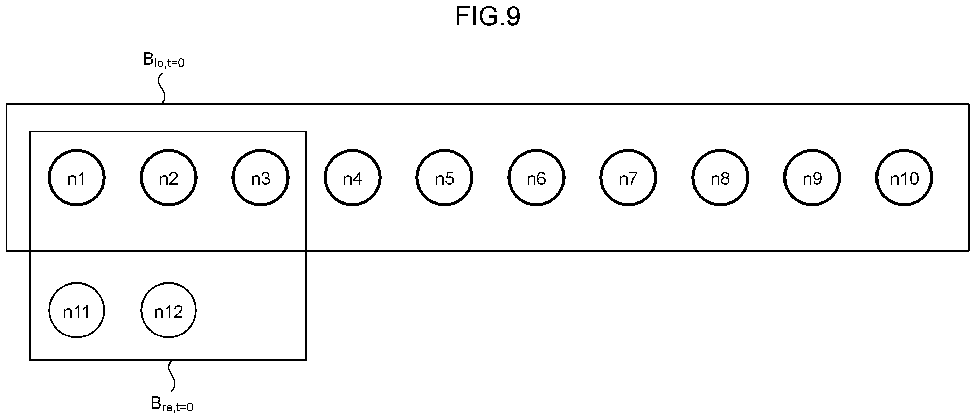

FIG. 9 is a diagram illustrating a relationship between the context graphs B_{lo,t=0} and B_{re,t=0}. In FIG. 9, edges between the nodes are not illustrated. As illustrated in FIG. 9, at the time t=0, the context graphs B_{lo,t=0} and B_{re,t=0} have the nodes n1 to n3 in common. Therefore, topics of the nodes n1 to n3 are topics known to the Local/Remote-side Agents. Topics of the nodes n4 to n10 are topics known to only the Local-side Agent. Topics of the nodes n11 and n12 are topics known to only the Remote-side Agent.

Next, the process (t=0) of identifying the confidential range and the disclosure status described in Step S12 of FIG. 3 will be described in more detail. The Local host 100 generates nodes corresponding to each sentence of the text T_{se,t} among the nodes in the context graph B_{lo,t} as a set E_{se,t} of the configuration elements of the confidential information. The set E_{se,t} has no edge. In addition, E_{se,t} ⊂ B_{lo,t}.

For example, the Local host 100 generates the set E_{se,t} of the configuration elements of the confidential information using Formula (4). F3() is a function for selecting and returning nodes including each sentence given in the context graph.${E}_{se , t} = F 3 \left({T}_{se , t}, {B}_{lo , t}\right)$ (4)

Here, the information that is disclosed from the Local-side Agent to the Remote-side Agent is represented by "B_{di,t}". In addition, B_{di,t} ⊂ B_{lo,t}. At the initial time

(t=0), nothing is disclosed. Therefore, "B_{di,t=0} = Null". B_{di,t} is defined by Formula (5). In Formula (5), "E_{ca,t-1}" represents a range where anonymization is performed at t-1 (previous step). Here, E_{ca,t=0} = E_{se,t=0}. In addition, E_{ca,t=-1} is Null. "\" represents subtraction of nodes.${B}_{di , t} = {B}_{lo , t} \ {E}_{ca , t - 1}$ (5)

When seen from the Local-side Agent, information that is considered to be known to the Remote-side Agent is represented by B_{lo,re}. For example, B_{lo,re} is defined by Formula (6). The Local host 100 identifies B_{lo,re} based on Formula (6).${B}_{lo , re , t} = {B}_{di , t} ∪ {B}_{re , t}$ (6)

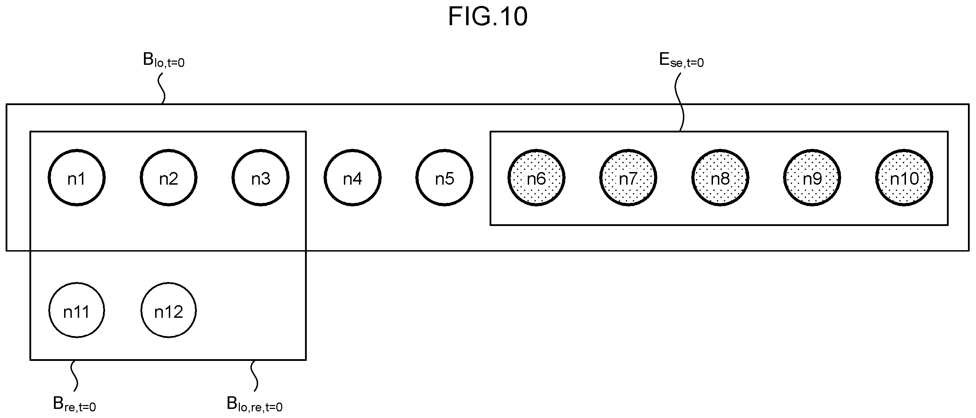

FIG. 10 is a diagram for supplementary description of the process (t=0) of identifying the confidential range and the disclosure status. Using FIG. 10, an example of B_{lo,t=0}, B_{re,t=0}, B_{lo,re,t=0}, and E_{se,t=0} will be described. For example, B_{lo,t=0} includes the nodes n1 to n10. B_{re,t=0} includes the nodes n1 to n3, n11, and n12. B_{lo,re,t=0} includes the nodes n1 to n3, n11, and n12. E_{se,t=0} includes the nodes n6 to n10. In FIG. 10, since the nodes n4 and n5 among the nodes n1 to 10 are not included in F_{se,t=0}, B_{lo,t=0} represents that there is no problem even if the topics of the nodes n4 and n5 are disclosed to the Remote-side Agent.

The Local host 100 identifies known and unknown configuration elements to the Remote-side Agent based on E_{se,t} and B_{lo,re,t}. For example, the set of the configuration elements of the confidential information unknown to the Remote-side Agent is represented by "E_{un,t}", and is defined by Formula (7). For example, the nodes in E_{un,t} are the nodes n6 to n10 of FIG. 10.${E}_{un , t} = {E}_{se , t} \ {B}_{lo , re , t}$ (7)

The set of the configuration elements of the confidential information known to the Remote-side Agent is represented by "E_{kn,t}", and is defined by Formula (8). Here, E_{kn,t=0} is Null.${E}_{kn , t} = {E}_{se , t} ∩ {B}_{lo , re , t}$ (8)

Next, the process (t=0) of determining the disclosure range described in Step S13 of FIG. 3 will be described in more detail. The process of determining the disclosure range corresponds to determination of a range where anonymization is performed. For example, the Local host 100 determines a range E_{ca,t=0} where anonymization is performed based on Formula (9). For example, at t=0, nodes corresponding to the range E_{ca,t=0} where anonymization is performed are the nodes n6 to n10 described in FIG. 10.${E}_{ca , t = 0} = {E}_{se , t = 0}$ (9)

Next, the process (t=0) of generating the anonymized document (anonymized message) described in Step S14 of FIG. 3 will be described in more detail. For example, the Local host 100 generates an anonymized document D_{an,t} by excluding the content of E_{ca,t} from the input document Dₜ. The Local host 100 generates an anonymized message T_{an,t} by excluding the content of E_{ca,t} from the utterance T_{me,t} of the Local-side Agent.

The Local host 100 may generate the anonymized document D_{an,t} using Formula (10). The Local host 100 may generate the anonymized message T_{an,t} using Formula (11).${D}_{an , t} = F 4 \left({D}_{t}, {E}_{ca , t}, {T}_{in}\right)$ (10) ${T}_{an , t} = F 4 \left({T}_{me , t}, {E}_{ca , t}, {T}_{in}\right)$ (11)

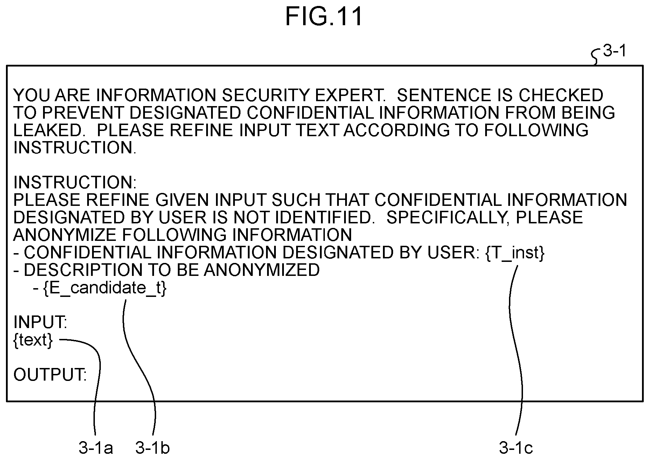

F4() in Formulae (10) and (11) is a function for returning a text where the contents in the second and third terms are anonymized in the text of the given first term. For example, the Local host 100 may acquire D_{an,t} and T_{an,t} by inputting a prompt 3-1 illustrated in FIG. 11 to the LLM execution unit 30.

FIG. 11 is a diagram illustrating an example of a prompt corresponding to F4. For example, the Local host 100 obtains F4(Dₜ,E_{ca,t},Tᵢₙ) by setting the input document Dₜ to an area 3-1a of the prompt 3-1, setting E_{ca,t} to an area 3-1b, setting the confidential information Tᵢₙ to an area 3-1c, and inputting the prompt to the LLM execution unit 30. The Local host 100 obtains F4 (T_{me,t},E_{ca,t},Tᵢₙ) by setting the utterance T_{me,t} of the Local-side Agent to the area 3-1a of the prompt 3-1, setting E_{ca,t} to the area 3-1b, setting the confidential information Tᵢₙ to the area 3-1c, and inputting the prompt to the LLM execution unit 30.

The Local host 100 may generate the anonymized document D_{an,t} and the anonymized message T_{an,t} by splitting the text of the first term sentence by sentence and deleting the split sentence that matches with a keyword or sentence representing the second term or the third term or has a similarity of a predetermined value or more in an index such as a cosine similarity from the first term.

Next, the process (t=0) of evaluating whether or not the anonymized document (anonymized message) described in Step S15 of FIG. 3 has a risk of confidential information leakage will be described in more detail. In the related process, the Local host 100 determines whether or not the confidential information Tᵢₙ designated from the user is leaked for the anonymized document D_{an,t} and the anonymized message T_{an,t}.

For example, the Local host 100 obtains T_{ch,t} using Formula (12). T_{ch,t} is "True" or "False". When T_{ch,t} is "True", the Local host 100 determines that the confidential information Tᵢₙ is not leaked. When T_{ch,t} is "False", the Local host 100 determines that the confidential information Tᵢₙ is leaked. T_{ch,t} also includes the reason for the determination of True or False. ${T}_{ch , t} = F 5 \left({D}_{an , t}+{T}_{an , t},{T}_{in}\right)$ (12)

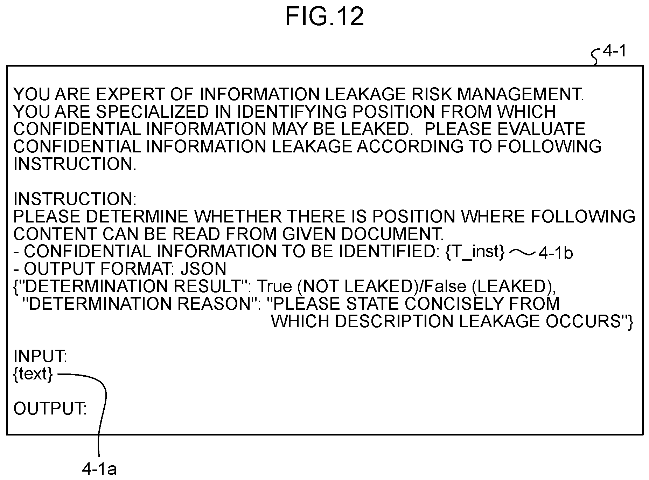

F5() is a function for returning the determination result of whether or not the confidential information represented by the instruction (second term) is leaked from the text (first term) and the reason for the determination result. For example, the Local host 100 may acquire T_{ch,t} by inputting a prompt 4-1 illustrated in FIG. 12 to the LLM execution unit 30.

FIG. 12 is a diagram illustrating an example of a prompt corresponding to F5. For example, the Local host 100 acquires T_{ch,t} by setting D_{an,t} + T_{an,t} to an area 4-1a of the prompt 4-1, setting Tᵢₙ to an area 4-1b, and inputting the prompt to the LLM execution unit 30.

When T_{ch,t} is "True", the Local host 100 transmits the anonymized document D_{an,t} and the anonymized message T_{an,t} to the Remote-side Agent.

On the other hand, when T_{ch,t} is "False", the Local host 100 adjusts the disclosure range.

Next, the process of adjusting the disclosure range described in Step S17 of FIG. 3 will be described in more detail. For example, when T_{ch,t} is "False" at t=0, the Local host 100 determines whether or not to adjust the range of E_{ca,t} using Formula (13). F6() is a function for determining whether the determination reason T_{ch,t} for the confidential information leakage can be resolved when the topic of E_{ca,t} (second term) is excluded from E_{se,t} (first term). Excluding the topic of E_{ca,t} (second term) from E_{se,t} (first term) represents that a sentence belonging to the previous anonymization range is deleted. T_{re,t} is "True" or "False".${T}_{re , t} = F 6 \left({E}_{se , t}, {E}_{ca , t}, {T}_{ch , t}\right)$ (13)

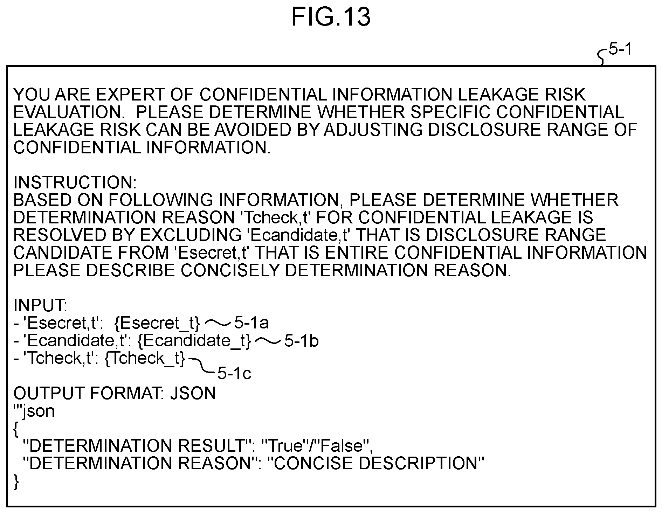

The Local host 100 may acquire T_{re,t} by inputting a prompt 5-1 illustrated in FIG. 13 to the LLM execution unit 30.

FIG. 13 is a diagram illustrating an example of a prompt corresponding to F6. For example, the Local host 100 obtains F6(E_{se,t},E_{ca,t},T_{ch,t}) setting E_{se,t} to an area 5-1a, setting E_{ca,t} to an area 5-1b, setting T_{ch,t} to an area 5-1c, and inputting the prompt to the LLM execution unit 30.

When T_{re,t} is "True", the Local host 100 generates the anonymized document D_{an,t} and the anonymized message T_{an,t} again without changing the range E_{ca,t} where anonymization is performed.

When T_{re,t} is "False" at t=0, the Local host 100 adjusts the range E_{ca,t} where anonymization is performed to E_{se,t}, and generates the anonymized document D_{an,t} and the anonymized message T_{an,t} again.

When T_{re,t} is "False" at t > 0, the Local host 100 adjusts the range E_{ca,t} where anonymization is performed to widen the range E_{ca,t}. When the range E_{ca,t} where anonymization is performed is widened, more topics are anonymized.

For example, the Local host 100 adjusts the range E_{ca,t} where anonymization is performed using Formula (14). F7() is a function for identifying a topic of the configuration element "E_{se,t}\E_{ca,t}" (second term) of the confidential information as a previous disclosure candidate from which the content of the text (Tᵢₙ) of the first term may be estimated. Since E_{ca,t} is a set of nodes that is a previous anonymization target, the Local host 100 identifies the cause for leakage focusing on the confidential information that is the disclosure candidate.${E}_{ca , t} = {E}_{ca , t} ∪ F 7 \left({T}_{in},{E}_{se , t}\{E}_{ca , t}\right)$ (14)

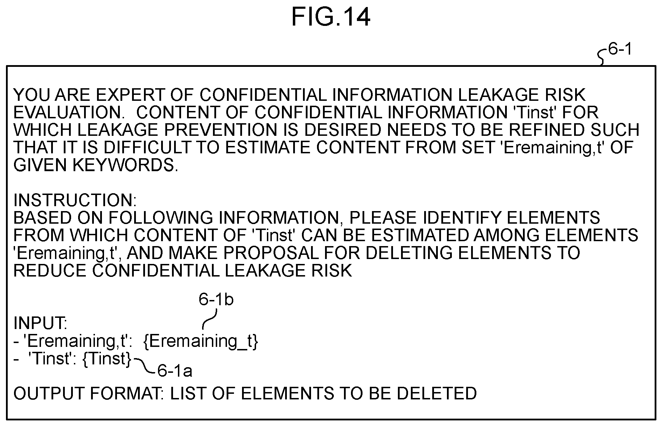

The Local host 100 may adjust the range E_{ca,t} where anonymization is performed by inputting a prompt 6-1 illustrated in FIG. 14 to the LLM execution unit 30.

FIG. 14 is a diagram illustrating an example of a prompt corresponding to F7. For example, the Local host 100 obtains F7 (Tᵢₙ,E_{se,t}\E_{ca,t}) by setting Tᵢₙ to an area 6-1a of the prompt 6-1, setting E_{se,t}\E_{ca,t} to an area 6-1b, and inputting the prompt to the LLM execution unit 30.

Next, a case where the process of generating the anonymized document (anonymized message) described in Step S14 of FIG. 3 is executed again will be described in more detail.

For example, the Local host 100 executes the anonymization again based on the anonymized document D_{an,t}, the anonymized message T_{an,t}, the range E_{ca,t} where anonymization is performed, and the determination reason T_{ch,t} of the previous confidential leakage evaluation.

The Local host 100 generates the anonymized document D_{an,t} again using Formula (15).${D}_{an , t} = F 8 \left({D}_{an , t}, {E}_{ca , t}, {T}_{in}, {T}_{ch , t}\right)$ (15)

The Local host 100 generates the anonymized message T_{an,t} again using Formula (16).${T}_{an , t} = F 8 \left({T}_{an , t}, {E}_{ca , t}, {T}_{in}, {T}_{ch , t}\right)$ (16)

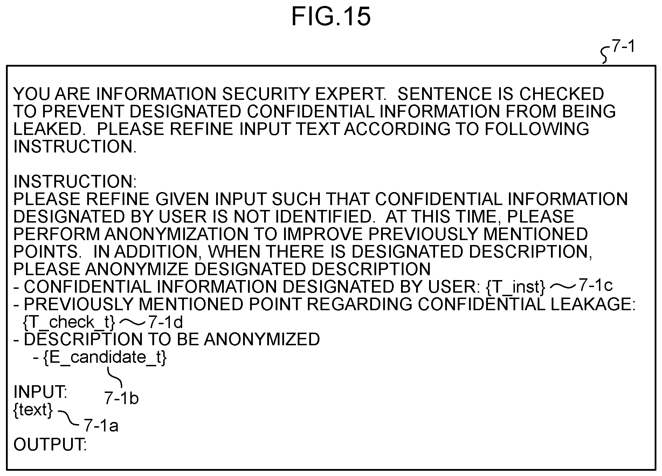

F8() in Formulae (15) and (16) is a function for returning a text that is anonymized according to the contents in the second, third, and fourth terms in the given text (first term). For example, the Local host 100 may acquire F8(D_{an,t},E_{ca,t},Tᵢₙ,T_{ch,t}) and F8(T_{an,t},E_{ca,t},Tᵢₙ,T_{ch,t}) by inputting a prompt 7-1 illustrated in FIG. 15 to the LLM execution unit 30.

FIG. 15 is a diagram illustrating an example of a prompt corresponding to F8. For example, the Local host 100 obtains F8 (D_{an,t},E_{ca,t},Tᵢₙ,T_{ch,t}) by setting D_{an,t} to an area 7-1a, setting E_{ca,t} to an area 7-1b, setting Tᵢₙ to an area 7-1c, setting T_{ch,t} to an area 7-1d, and inputting the prompt to the LLM execution unit 30. The Local host 100 obtains F8 (T_{an,t},E_{ca,t},Tᵢₙ,T_{ch,t}) by setting T_{an,t} to the area 7-1a, setting E_{ca,t} to the area 7-1b, setting Tᵢₙ to the area 7-1c, setting T_{ch,t} to the area 7-1d, and inputting the prompt to the LLM execution unit 30.

The Local host 100 may generate the anonymized document D_{an,t} and the anonymized message T_{an,t} by splitting the text of the first term sentence by sentence and deleting the split sentence that matches with a keyword or sentence representing the second term, the third term, or the fourth term or has a similarity of a predetermined value or more in an index such as a cosine similarity from the first term.

The Local host 100 repeatedly executes the processes described in Steps S14 to S17 with reference to FIG. 3 and the like until T_{ch,t} is "True" in the evaluation of whether or not the anonymized document D_{an,t} and the anonymized message T_{an,t} have a risk of confidential information leakage.

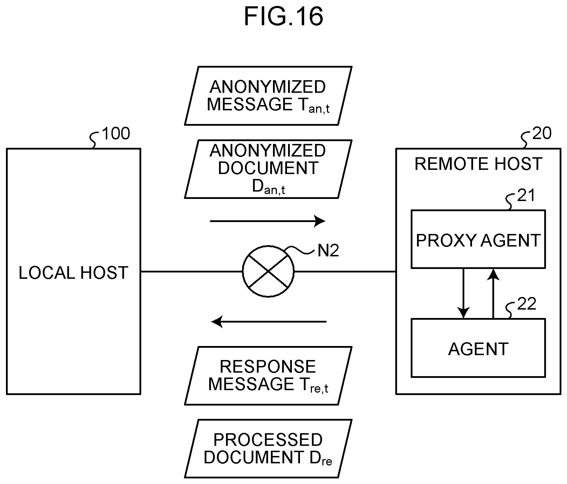

When T_{ch,t} is "True", the Local host 100 transmits the anonymized document D_{an,t} and the anonymized message T_{an,t} to the Remote host 20. FIG. 16 is a diagram for supplementary description of the process of the Remote host.

As illustrated in FIG. 16, the Local host 100 transmits the anonymized document D_{an,t} and the anonymized message T_{an,t} to the Remote host 20. The Proxy Agent 21 of the Remote host 20 outputs the anonymized document D_{an,t} and the anonymized message T_{an,t} to the Agent 22. The Agent 22 executes the task to output the response message T_{re,t} and the processed document Dᵣₑ to the Proxy Agent 21 based on the anonymized document D_{an,t} and the anonymized message T_{an,t}. The Proxy Agent 21 transmits the response message T_{re,t} and the processed document Dᵣₑ to the Local host 100.

The Agent 22 does not necessarily complete the task by performing the process once. In addition, the Agent 22 may complete the task according to the delegation content, or may delegate information insufficient for the execution to the Local host 100.

When the response message T_{re,t} and the processed document Dᵣₑ are received from the Remote host 20, the Local host 100 executes the confidential information protection process (t > 0) described in FIG. 3 again. In the following description, the response message T_{re,t} may also be simply referred to as "T_{re,t}", and the processed document Dᵣₑ may also be simply referred to as "Dᵣₑ".

In the following description, the process described in each step of FIG. 3 where t > 0 will be described in more detail. t > 0 represents a state where the Local-side Agent transmits information to the Remote-side Agent and receives a response. For example, whenever the Local-side Agent receives from the response from the Remote-side Agent, 1 is added to the value of t.

First, the process (t > 0) of identifying the confidential information and the configuration elements described in Step S10 of FIG. 3 will be described in more detail. This process is a process of extracting a text that can configure the confidential information using LLM based on an input document, an utterance of the Local-side Agent, a response from the Remote host 20, and the like.

For example, the Local host 100 identifies the text T_{se,t} using Formula (17).${T}_{se , t} = F 1 \left({D}_{t}, {T}_{re , t}, {T}_{me , t}\right) , \left.{T}_{in}\right)$ (17)

F1() is a function for extracting a sentence including the configuration information of the confidential information in the text (Dₜ,T_{re,t},T_{me,t}) based on an instruction regarding the confidential information Tᵢₙ from the user. The Local host 100 obtains F1(Dₜ,T_{re,t},T_{me,t}),Tᵢₙ) by setting the confidential information Tᵢₙ to the area 1-1a of the prompt 1-1 described in FIG. 4, setting Dₜ, T_{re,t}, and T_{me,t} to the area 1-1b, and inputting the prompt to the LLM execution unit 30.

Next, the process (t > 0) regarding the generation and update of the context graph described in Step S11 of FIG. 3 will be described in more detail. Whenever the input document Dₜ input from the user and the conversation between the Local-side Agent and the Remote-side Agent progress, the Local host 100 updates context graphs Bₗₒ and Bᵣₑ regarding the information of the Local/Remote-side Agents.

The Local host 100 updates a context graph B_{lo,t} using Formula (2). The description of the process in which the Local host 100 updates the context graph B_{lo,t} using Formula (2) is the same as that of t=0.

The Local host 100 updates a context graph B_{re,t} using Formula (3). The description of the process in which the Local host 100 updates the context graph B_{re,t} using Formula (3) is the same as that of t=0. The Local host 100 obtains F2 (T_{re,t}) by setting the response message T_{re,t} from the Remote-side Agent to the area 2-1a of the prompt 2-1 illustrated in FIG. 6 and inputting the prompt to the LLM execution unit 30.

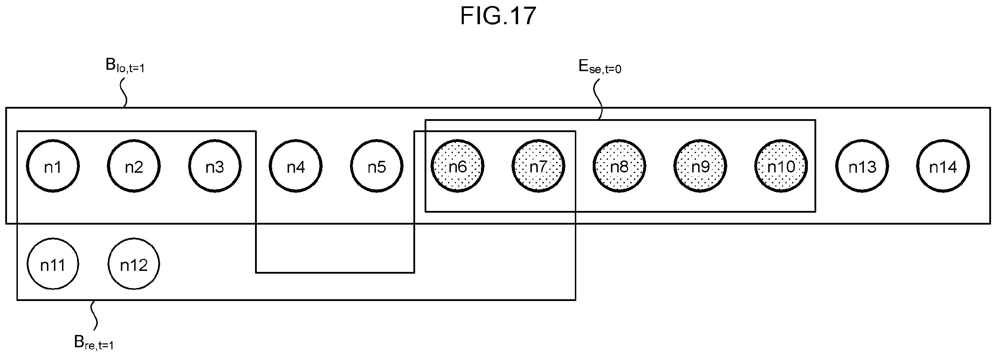

FIG. 17 is a diagram illustrating a relationship between context graphs B_{lo,t=1}, B_{re,t=1}, and E_{se,t=0}. As illustrated in FIG. 17, at the time t=1, the context graph B_{lo,t=1} includes nodes n1 to n14. The context graph B_{re,t=1} includes nodes n1 to n3, n6, n7, n11, and n12. E_{se,t=0} includes the nodes n6 to n10. In the example illustrated in FIG. 17, among the nodes n6 to n10 in the set E_{se,t} including the configuration elements of the confidential information, topics of the nodes n6 and n7 are topics known to the Remote-side Agent at the time t=1.

Next, the process (t > 0) of identifying the confidential range and the disclosure status described in Step S12 of FIG. 3 will be described in more detail. The Local host 100 generates nodes corresponding to each sentence of the text T_{se,t} among the nodes in the context graph B_{lo,t} as a set E_{se,t} of the configuration elements of the confidential information. For example, the Local host 100 generates the set E_{se,t} of the configuration elements of the confidential information using Formula (4). The process in which the Local host 100 generates the set E_{se,t} of the configuration elements of the confidential information using Formula (4) is the same as that of t=0.

Information B_{di,t-1} that is disclosed from the Local-side Agent to the Remote-side Agent is defined by Formula (18). The Local host 100 identifies B_{di,t-1} (in the case of t=1, B_{di,t=0}) based on Formula (18).${B}_{di , t - 1} = {B}_{lo , t - 1} \ {E}_{ca , t - 1}$ (18)

The Local host 100 updates B_{lo,re,t} based on Formula (6).

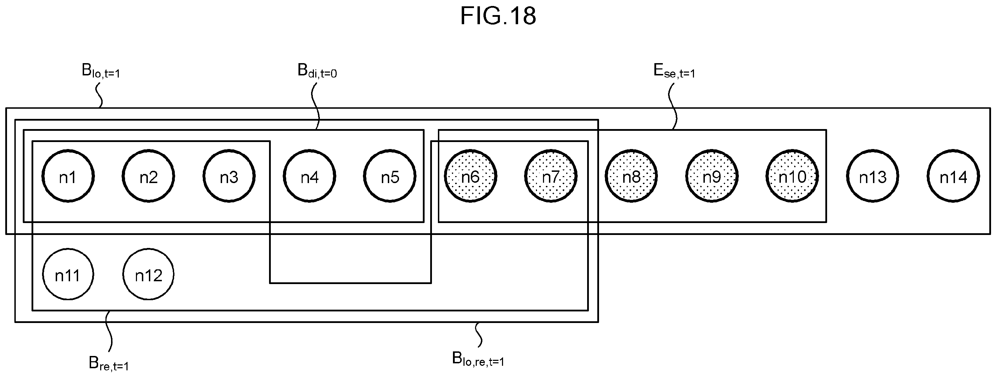

FIG. 18 is a diagram for supplementary description of a process (t=1) of identifying a confidential range and a disclosure status. Using FIG. 18, an example of B_{lo,t=1}, B_{re,t=1}, B_{lo,re,t=1}, E_{se,t=1}, and B_{di,t=0} will be described. For example, B_{lo,t=1} includes the nodes n1 to n14. B_{re,t=1} includes the nodes n1 to n3, n6, n7, n11, and n12. B_{lo,re,t=1} includes the nodes n1 to n7, n11, and n12. E_{se,t=1} includes the nodes n6 to n10. B_{di,t=0} includes n1 to n5.

The Local host 100 identifies the set E_{un,t} including the configuration elements of the confidential information that are unknown to the Remote-side Agent based on Formula (7), E_{se,t}, and B_{lo,re,t}. The description regarding Formula (7) is the same as described above. For example, the nodes in E_{un,t} are the nodes n8 to n10 of FIG. 18.

The Local host 100 identifies the set E_{kn,t} including the configuration elements of the confidential information that are known to the Remote-side Agent based on Formula (8), E_{se,t}, and B_{lo,re,t}. The description regarding Formula (8) is the same as described above. For example, the nodes in E_{kn,t} are the nodes n6 and n7 of FIG. 18.

Next, the process (t > 0) of determining the disclosure range described in Step S13 of FIG. 3 will be described in more detail. The Local host 100 narrows the disclosure range depending on the knowledge status for the response to the Remote-side Agent.

First, the Local host 100 extracts a configuration element E_{me,t} of the confidential information in the response (message T_{me,t}) to the Remote-side Agent. In order to focus on the configuration element of the confidential information in the latest message transmitted from the Local host 100 to the Remote-side Agent, first, E_{me,t} is focused on instead of E_{se,t} (E_{me,t} ⊆ E_{se,t}).

The Local host 100 extracts T_{me_se,t} based on Formula (19). F1() is a function for extracting a sentence including the configuration information of the confidential information in the text. The other descriptions regarding F1() are the same as the above descriptions regarding F1().${T}_{me_se , t} = F 1 \left({T}_{me}, {T}_{in}\right)$ (19)

The Local host 100 identifies E_{me,t} based on Formula (20). The other descriptions regarding F3() are the same as the above descriptions regarding F3().${E}_{me , t} = F 3 \left({T}_{me_se , t}, {T}_{in}\right)$ (20)

When E_{me,t} is Null, the Local host 100 sets E_{ca,t} to Null.

When E_{me,t} satisfies "E_{me,t} ⊂ E_{kn,t}" is satisfied instead of being Null, the Local host 100 sets E_{ca,t} using Formula (21) to anonymize portions other than a part of E_{kn,t} needed for the response to the counterpart in the response (message T_{me,t}) to the Remote-side Agent.${E}_{ca , t} = {E}_{un , t} ∪ F 9 \left({E}_{kn , t}, {T}_{me _ se , t}\right)$ (21)

F9() is a function for returning a set of topics not including the content of the text of the second term in the set (first term) of the given topics. The Local host 100 may obtain F9(E_{kn,t},T_{me_se,t}) by generating a prompt corresponding to F9 and inputting the prompt to the LLM execution unit 30.

For example, when the node n7 of FIG. 18 is included in T_{me,t}, the nodes n8 to n10 and the node n6 (the elements of E_{kn,t} not included in T_{me,t}) are set to E_{ca,t} as the anonymization target.

When E_{me,t} satisfies "E_{me,t} ⊂ E_{un,t}" instead of being Null, the Local host 100 sets E_{ca,t} using Formula (22) to anonymize a specific description in the response T_{me,t} to the Remote-side Agent.${E}_{ca , t} = {E}_{se , t} \ F 10 \left(F3\left({E}_{se , t}, {T}_{me _ se , t}\right)\right)$ (22)

The description regarding F3() is the same as the above description regarding F3(). F10() is a function for allowing the element of the second term to select a node of a higher-layer topic among the entire set (first term) of the topics of the configuration elements of the confidential information. The Local host 100 replaces the utterance content of the Local-side Agent with a higher-layer abstract topic to avoid leakage of the confidential information.

For example, when the nodes n8 and n10 of FIG. 18 are included in T_{me,t}, nodes other than the nodes n6 and n7 corresponding to the higher-layer topic are set to E_{ca,t} as the anonymization target.

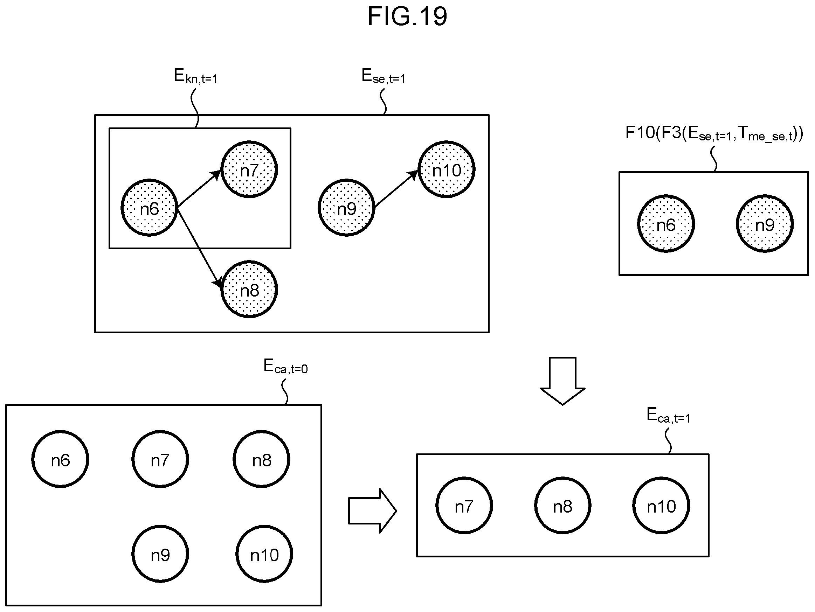

FIG. 19 is a diagram for supplementary description of a process of determining a disclosure range. For example, when E_{se,t=1} includes the nodes n6 to n10 and F10(F3(E_{se,t=1}, T_{me_se,t})) includes the nodes n6 and n9, E_{ca,t=1} includes the nodes n7, n8, and n10. For example, at the time t=0, E_{c,t=0} includes the nodes n6 to n10. However, at t=1, E_{ca,t=1} includes the nodes n7, n8, and n10, and the range where anonymization is performed is adjusted. E_{kn,t=1} includes n6 and n7.

After determining the disclosure range, the Local host 100 executes the process (t > 0) of generating the anonymized document (anonymized message) described in Step S14 of FIG. 3. The process (t > 0) of generating the anonymized document (anonymized message) is the same as the process where t=0.

After performing the process of generating the anonymized document (anonymized message), the Local host 100 executes the process (t > 0) described in Step S15 of FIG. 3 of evaluating whether or not the anonymized document (anonymized message) has a risk of confidential information leakage. The process (t > 0) of evaluating whether or not the anonymized document (anonymized message) has a risk of confidential information leakage is the same as the process where t=0.

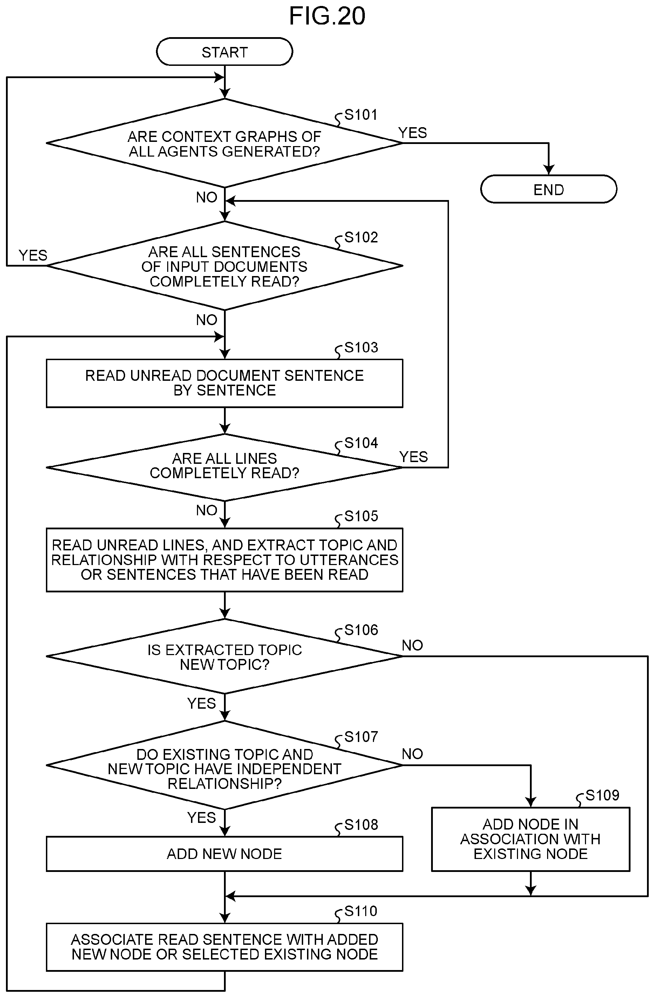

Next, the procedure of the process of generating and updating the context graph described in Step S11 of FIG. 3 will be described in more detail. FIG. 20 is a flowchart illustrating the procedure of the process of generating and updating the context graph. As illustrated in FIG. 20, the Local host 100 determines whether or not the context graphs of all the Agents are generated (Step S101). When the context graphs of all the Agents are generated (Step S101, Yes), the Local host 100 ends the process. On the other hand, when the context graphs of all the Agents are not generated (Step S101, No), the Local host 100 proceeds to Step S102.

When all the sentences in the input document are completely read (Step S102, Yes), the Local host 100 proceeds to Step S101. When all the sentences in the input document are not completely read (Step S102, No), the Local host 100 reads the unread document sentence by sentence (Step S103).

When all the lines are completely read (Step S104, Yes), the Local host 100 proceeds to Step S102. On the other hand, when all the lines are not completely read (Step S104, No), the Local host 100 proceeds to Step S105.

The Local host 100 reads the unread lines, and extracts a topic and a relationship with respect to the utterances or sentences that have been read (Step S105). When the extracted topic is not a new topic (Step S106, No), the Local host 100 proceeds to Step S110.

On the other hand, when the extracted topic is a new topic (Step S106, Yes), the Local host 100 proceeds to Step S107. When an existing topic and a new topic have an independent relationship (Step S107, Yes), the Local host 100 newly adds a node (Step S108).

When an existing topic and a new topic do not have an independent relationship (Step S107, No), the Local host 100 adds a node in association with the existing node (Step S109). The Local host 100 associates the read sentence with the added new node or the selected existing node (Step S110), and proceeds to Step S103.

On the other hand, when an existing topic and a new topic have an independent relationship (Step S107, Yes), the Local host 100 newly adds a node (Step S108), and proceeds to Step S110.

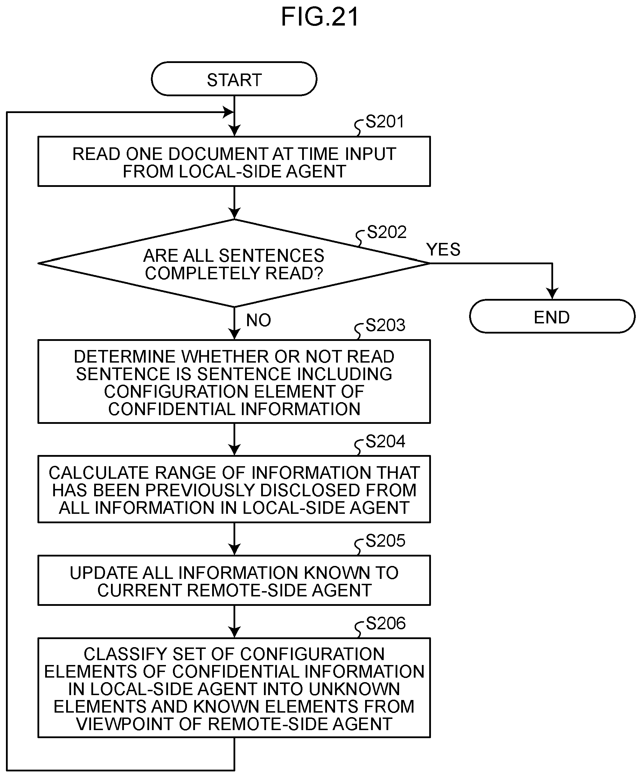

Next, the procedure of the process of identifying the confidential range and the disclosure status described in Step S12 of FIG. 3 will be described in more detail. FIG. 21 is a flowchart illustrating the procedure of the process of identifying the confidential range and the disclosure status. The Local host 100 reads one document at a time input from the Local-side Agent sentence by sentence (Step S201). When all the sentences are completely read (Step S202, Yes), the Local host 100 ends the process.

When all the sentences are not completely read (Step S202, No), the Local host 100 determines whether or not the read sentence is a sentence including the configuration element of the confidential information (Step S203). The Local host 100 calculates the range of the information that has been previously disclosed from all the information in the Local-side Agent (Step S204).

The Local host 100 combines the information (response) disclosed from the Remote-side Agent to the Local-side Agent and the information (document + message) disclosed from the Local-side Agent to the Remote-side Agent to update all the information known to the current Remote-side Agent (Step S205).

The Local host 100 classifies the set of the configuration elements of the confidential information in the Local-side Agent into unknown elements and known elements from the viewpoint of the Remote-side Agent (Step S206), and proceeds to Step S201.

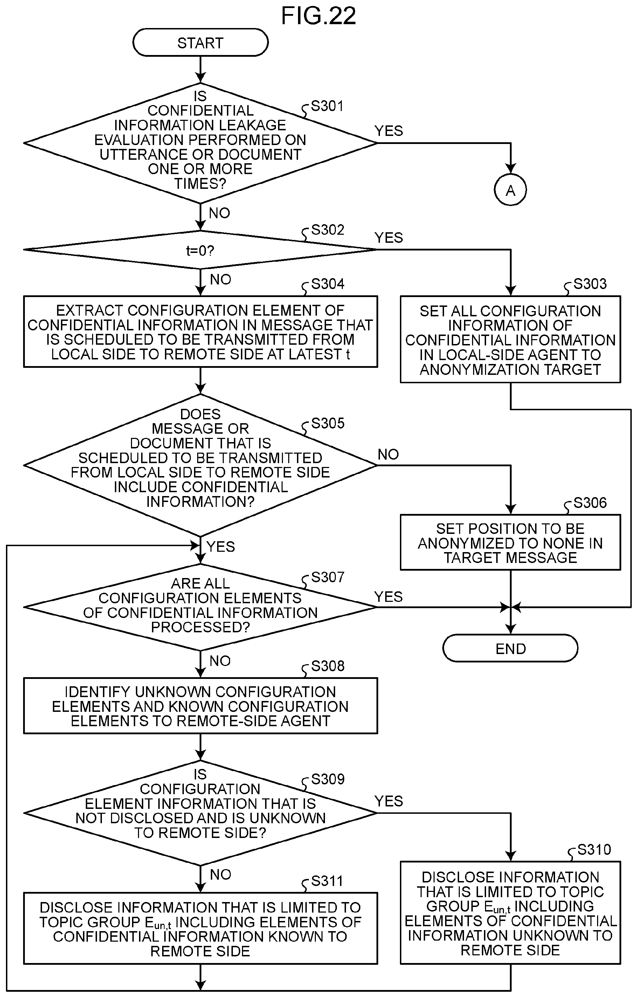

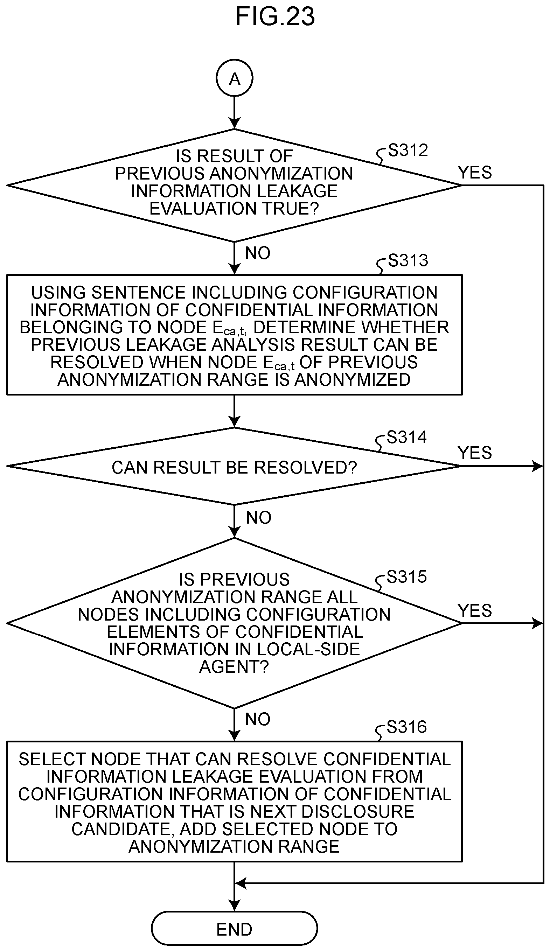

Next, the procedure of the process of determining the disclosure range described in Step S13 of FIG. 3 will be described in more detail. FIGS. 22 and 23 are flowcharts illustrating the procedure of the process of determining the disclosure range. FIG. 22 will be described. When the confidential information leakage evaluation is not performed one or more times on the utterance or document (Step S301, No), the Local host 100 proceeds to Step S302.

In the case of t=0 (Step S302, Yes), the Local host 100 sets all the configuration information of the confidential information in the Local-side Agent to the anonymization target (Step S303), and ends the process.

On the other hand, when t=0 is not satisfied (Step S302, No), the Local host 100 extracts the configuration element of the confidential information in a message that is scheduled to be transmitted from the Local side to the Remote side at the latest t (Step S304). When the message or document that is scheduled to be transmitted from the Local side to the Remote side does not include the confidential information (Step S305, No), the Local host 100 sets a position to be anonymized to none in the target message (Step S306), and ends the process.

On the other hand, when the message or document that is scheduled to be transmitted from the Local side to the Remote side includes the confidential information (Step S305, Yes), the Local host 100 proceeds to Step S307. When all the configuration elements of the confidential information are processed (Step S307, Yes), the Local host 100 ends the process.

On the other hand, when all the configuration elements of the confidential information are not processed (Step S307, No), the Local host 100 identifies unknown configuration elements and known configuration elements to the Remote-side Agent among the configuration elements of the confidential information on the Local side (Step S308).

When the configuration element is information that is not disclosed and is unknown to the Remote side (Step S309, Yes), the Local host 100 discloses information that is limited to a topic group E_{un,t} including the elements of the confidential information unknown to the Remote side (Step S310), and proceeds to Step S307.

On the other hand, when the configuration element is not information that is not disclosed and is unknown to the Remote side (Step S309, No), the Local host 100 discloses information that is limited to a topic group E_{kn,t} including the elements of the confidential information known to the Remote side (Step S311), and proceeds to Step S307.

When the confidential information leakage evaluation is performed one or more times on the utterance or document in Step S301 (Step S301, Yes), the Local host 100 proceeds to Step S312 of FIG. 23.

The description proceeds to FIG. 23. When the result of the previous anonymization information leakage evaluation is True (Step S312, Yes), the Local host 100 ends the process. On the other hand, when the result of the previous anonymization information leakage evaluation is not True (Step S312, No), the Local host 100 proceeds to Step S313.

Using the sentence including the configuration information of the confidential information belonging to the node E_{ca,t}, the Local host 100 determines whether the previous leakage analysis result can be resolved when the node E_{ca,t} of the previous anonymization range is anonymized (Step S313). When the previous leakage analysis result can be resolved (Step S314, Yes), the Local host 100 ends the process.

On the other hand, when it is difficult to resolve the previous leakage analysis result (Step S314, No), the Local host 100 proceeds to Step S315. When the previous anonymization range is all the nodes including the configuration elements of the confidential information of the Local-side Agent (Step S315, Yes), the Local host 100 ends the process.

On the other hand, when the previous anonymization range is not all the nodes including the configuration elements of the confidential information of the Local-side Agent (Step S315, No), the Local host 100 proceeds to Step S316. The Local host 100 selects a node that can resolve the confidential information leakage evaluation from the configuration information of the confidential information that is the next disclosure candidate, adds the selected node to the anonymization range (Step S316), and ends the process.

As described above, based on information exchanged between an internal Agent and an external Agent, the Local host 100 generates a context graph where a plurality of elements in the information and relationships between the elements are represented by a graph structure. The Local host 100 identifies unknown elements and known elements to the external Agent among elements of previously designated confidential information based on the context graph, determines an anonymization range based on the unknown elements and the known elements to the external Agent, anonymizes anonymization target information based on the anonymization range to generate anonymized information, and transmits the generated anonymized information. As a result, a part of processes can be delegated to a Remote side without giving too much element information to estimate confidential information.

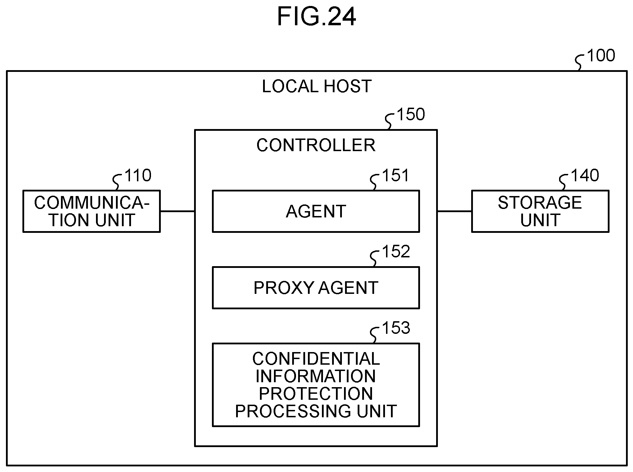

Next, a configuration example of the Local host 100 according to the present embodiment will be described. FIG. 24 is a functional block diagram illustrating a configuration of a Local host according to the present embodiment. As illustrated in FIG. 24, the Local host 100 includes a communication unit 110, a storage unit 140, and a controller 150.

The communication unit 110 executes data communication between the Remote host 20, the terminal device 40, and the LLM execution unit 30 via the networks N1, N2, and N3.

The storage unit 140 stores various data used for the controller 150 to perform various processes. The storage unit 140 is a memory or the like. For example, the storage unit 140 stores information for performing the confidential information protection process described in FIG. 3.

The controller 150 includes an Agent 151, a Proxy Agent 152, and a confidential information protection processing unit 153. The controller 150 is a processing unit that controls the entire Local host 100, and is implemented by, for example, a processor, and a combination of a central processing unit (CPU) and a graphics processing unit (GPU). The Agent 151, the Proxy Agent 152, and the confidential information protection processing unit 153 can also be implemented by collaboration (cooperation) of the CPU and the GPU.

The Agent 151 exchanges data with the Agent 22 of the Remote host 20 via the Proxy Agent 152 based on the information received from the terminal device 40, and executes the task. The Agent 151 transmits the execution result of the task to the terminal device 40.

For example, the Agent 151 receives the input document Dₜ, the criterion Tᵢₙ for the confidential information leakage, the task, and the like from the terminal device 40. The Agent 151 divides the task into a plurality of subtasks, outputs the message T_{me,t}, the input document Dₜ, and Tᵢₙ for delegating the execution of the subtask to the Proxy Agent 152, and receives the response message T_{re,t} from the Agent 22 of the Remote host 20. The Agent 151 repeatedly executes the above-described process until the process of each subtask is completed.

When the message T_{me,t}, the input document Dₜ, and Tᵢₙ are received from the Agent 151, the Proxy Agent 152 delegates the anonymization of the message T_{me,t} and the input document Dₜ by outputting the message T_{me,t}, the input document Dₜ, and Tᵢₙ to the confidential information protection processing unit 153, and acquires the anonymized document D_{an,t} and the anonymized message T_{an,t}.

The Proxy Agent 152 receives the response message T_{re,t} and the processed document Dᵣₑ from the Remote host 20 by transmitting the anonymized document D_{an,t} and the anonymized message T_{an,t} to the Remote host 20. The Proxy Agent 152 outputs the response message T_{re,t} and the processed document Dᵣₑ to the Agent 151 and the confidential information protection processing unit 153.

The confidential information protection processing unit 153 anonymizes the message T_{me,t} and the input document Dₜ by executing the confidential information protection process described in FIG. 3 and the like, and generates the anonymized document D_{an,t} and the anonymized message T_{an,t}. More specifically, the confidential information protection processing unit 153 executes the following process.

For example, the confidential information protection processing unit 153 generates the context graphs B_{lo,t} and B_{re,t} based on the information exchanged between the Agent 151 of the Local host 100 and the Agent 22 of the Remote host 20. For example, the confidential information protection processing unit 153 generates the context graphs B_{lo,t} and B_{re,t} using Formula (2), Formula (3), and the other related formulae.

Based on the context graphs B_{lo,t} and B_{re,t}, the confidential information protection processing unit 153 identifies the set E_{un,t} of unknown elements and the set E_{kn,t} of known elements to the Agent 22 of the Remote host 20 among the elements of the previously designated confidential information Tᵢₙ. For example, the confidential information protection processing unit 153 may identify the set E_{un,t} of unknown elements and the set E_{kn,t} of known elements to the Agent 22 of the Remote host 20 using Formula (7), Formula (8), and the other related formulae.

The confidential information protection processing unit 153 determines the range E_{ca,t} where anonymization is performed based on the set E_{un,t} of unknown elements and the set E_{kn,t} of known elements to the Agent 22 of the Remote host 20. For example, the confidential information protection processing unit 153 determines the range E_{ca,t} where anonymization is performed using Formula (21), Formula (22), and the other related formulae when t > 0. When t=0, the confidential information protection processing unit 153 sets the range E_{ca,t} where anonymization is performed to E_{se,t}.

The confidential information protection processing unit 153 anonymizes the anonymization target information (for example, the message T_{me,t} and the input document Dₜ) based on the range E_{ca,t} where anonymization is performed. For example, the confidential information protection processing unit 153 anonymizes the anonymization target information through the process described in Step S14 of FIG. 3.

The confidential information protection processing unit 153 evaluates whether or not the anonymized document D_{an,t} and the anonymized message T_{an,t} have a risk of confidential information leakage, and when there is no risk of leakage, outputs the anonymized document D_{an,t} and the anonymized message T_{an,t} to the Proxy Agent 152. On the other hand, when the anonymized document D_{an,t} and the anonymized message T_{an,t} have a risk of confidential information leakage, the confidential information protection processing unit 153 adjusts the range E_{ca,t} where anonymization is performed, and repeatedly executes the process of generating the anonymized document D_{an,t} and the anonymized message T_{an,t} again until the risk of leakage is resolved. The process in which the confidential information protection processing unit 153 evaluates whether or not there is a risk of confidential information leakage corresponds to the process described in Step S15 of FIG. 3. The process in which the confidential information protection processing unit 153 adjusts the range where anonymization is performed corresponds to the process described in Step S17 of FIG. 3.

The confidential information protection processing unit 153 receives the execution result of the LLM execution unit 30 by appropriately transmitting the prompt to the LLM execution unit 30 while performing the above-described process.

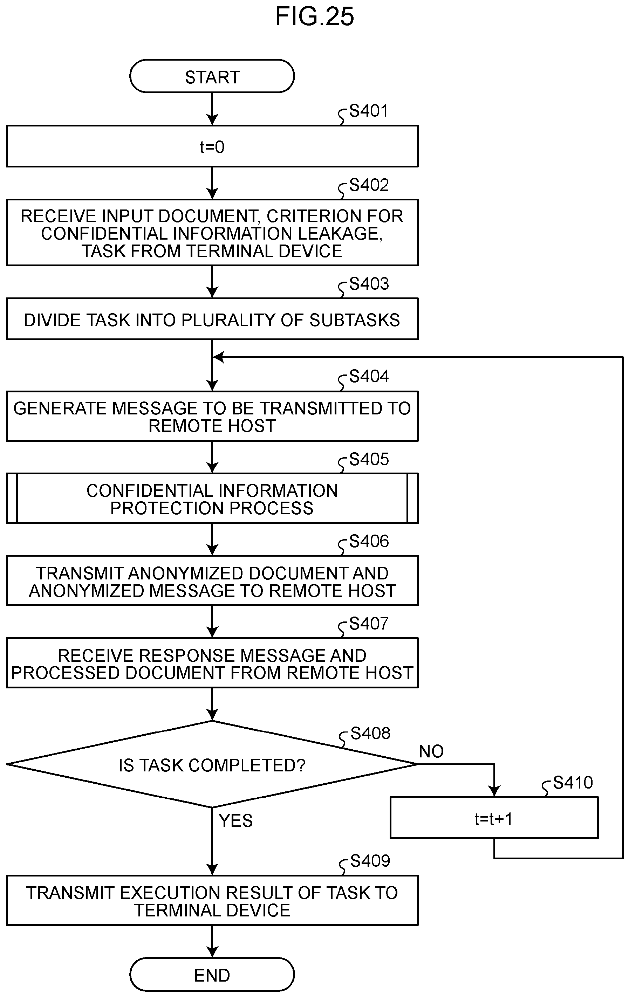

Next, an example of the procedure of the Local host 100 according to the present embodiment will be described. FIG. 25 is a flowchart illustrating an example of the procedure of the Local host according to the present embodiment. As illustrated in FIG. 25, the Local host 100 sets t to t=0 (Step S401). The Local host 100 receives the input document Dt, the criterion Tᵢₙ for the confidential information leakage, the task, and the like from the terminal device 40 (Step S402).

The Local host 100 divides the task into a plurality of subtasks (Step S403). The Local host 100 generates the message T_{me,t} to be transmitted to the Remote host 20 (Step S404). The Local host 100 executes the confidential information protection process (Step S405).

The Local host 100 transmits the anonymized document D_{an,t} and the anonymized message T_{an,t} to the Remote host 20 (Step S406). The Local host 100 receives the response message T_{re,t} and the processed document Dᵣₑ from the Remote host 20 (Step S407).

When the task is completed (Step S408, Yes), the Local host 100 transmits the execution result of the task to the terminal device 40 (Step S409). On the other hand, when the task is not completed (Step S408, No), the Local host 100 updates t depending on the value obtained by adding 1 to t (Step S410), and proceeds to Step S404.

Next, the effects of the Local host 100 according to the present embodiment will be described. Based on information exchanged between an internal Agent and an external Agent, the Local host 100 generates a context graph where a plurality of elements in the information and relationships between the elements are represented by a graph structure. The Local host 100 identifies unknown elements and known elements to the external Agent among elements of previously designated confidential information based on the context graph, determines an anonymization range based on the unknown elements and the known elements to the external Agent, anonymizes anonymization target information based on the anonymization range to generate anonymized information, and transmits the generated anonymized information. As a result, a part of processes can be delegated to a Remote side without giving too much element information to estimate confidential information.

The Local host 100 generates a context graph of the internal Agent based on a message and an input document transmitted from the internal Agent to the external Agent, and generates a context graph of the external Agent based on a response message transmitted from the external Agent to the internal Agent. As a result, the information known to the internal Agent and the external Agent can be managed by the data structure of the context graph.

The Local host 100 identifies a common element that is known to the internal Agent and the external Agent based on the context graph of the internal Agent and the context graph of the external Agent, and identifies remaining elements other than the common element among the elements of the confidential information as the unknown elements to the external Agent. As a result, the elements unknown to the external Agent can be appropriately identified.

The Local host 100 identifies an element other than the elements of the confidential information among the known elements to the external Agent, and determines a set of the identified element and the unknown elements to the external Agent as the anonymization range. As a result, the anonymization range can be appropriately set.

The Local host 100 evaluates whether or not the confidential information is leaked from the anonymized information based on the anonymized information and the confidential information, and adjusts the anonymization range based on an evaluation result. For example, the Local host 100 adds the element of the confidential information to the anonymization range. As a result, the anonymization range can be optimized.

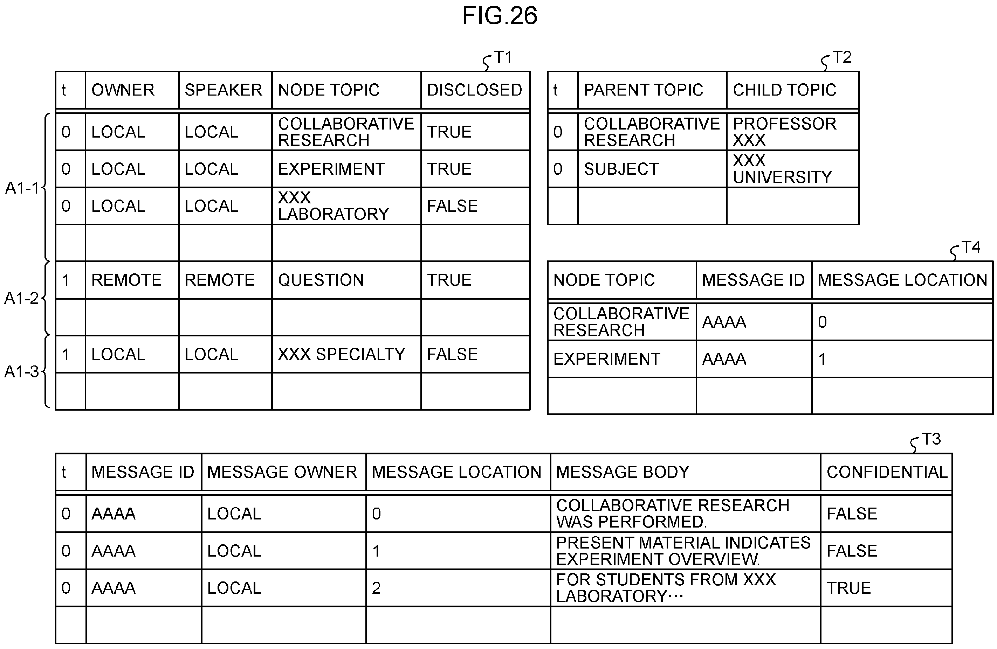

The Local host 100 may manage the context graphs B_{lo,t} and B_{re,t} using any data structure, for example, can also manage the context graphs B_{lo,t} and B_{re,t} using a data structure illustrated in FIG. 26. FIG. 26 is a diagram illustrating an example of the data structure of the context graph. As illustrated in FIG. 26, the information regarding the context graph is stored by tables T1, T2, T3, and T4. For example, the tables T1 to T4 are stored in the storage unit 140.

The table T1 is a table that manages nodes, and includes t, owner, speaker, node topic, and disclosed. t is the same as t described above. owner represents whether the node belongs to the Local side or the Remote side. node topic is a topic corresponding to the node. disclosed represents whether or not the topic of the node is disclosed to the node.

The table T2 is a table that manages edges. parent topic represents a parent node of the edge, and child topic represents a child node of the edge.

The table T3 is a table that manages a message output from the Agent. message id is information for identifying the message. message owner is information for identifying an Agent that is an output source of the message (utterance). message location represents a position of the message. message body represents a document of the message. confidential represents whether or not the message is confidential information.

The table T4 represents a correspondence between the message and the node. The descriptions of node topic, message id, and message location are the same as described above.

For example, information regarding an area A1-1 of the table T1 corresponds to the information of B_{lo,t=0}. Information regarding an area A1-2 of the table T1 corresponds to the information of B_{re,t=0}. Information regarding an area A1-3 of the table T1 corresponds to the information of B_{lo,t=1}.

Next, an example of a hardware configuration of a computer that implements the same functions as those of the Local host 100 described above in the embodiment will be described in order.

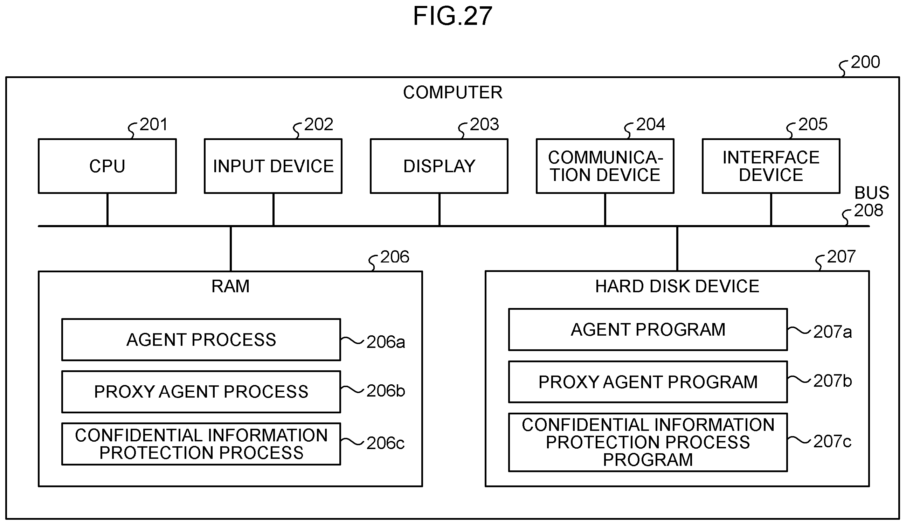

FIG. 27 is a diagram illustrating an example of a hardware configuration of a computer that implements the same functions as the Local host according to the present embodiment. As illustrated in FIG. 27, a computer 200 includes a CPU 201 that executes various arithmetic processing, an input device 202 that receives data input from the user, and a display 203. In addition, the computer 200 includes a communication device 204 that transmits and receives data to and from another external device or the like via a wired or wireless network, and an interface device 205. In addition, the computer 200 includes a RAM 206 that temporarily stores various information and a hard disk device 207. The devices 201 to 207 are connected via a bus 208. The computer 200 may include a plurality of CPUs.

The hard disk device 207 includes an Agent program 207a, a Proxy Agent program 207b, and a confidential information protection process program 207c. In addition, the CPU 201 reads and loads each of the programs 207a to 207c to the RAM 206.

The Agent program 207a functions as an Agent process 206a. The Proxy Agent program 207b functions as a Proxy Agent process 206b. The confidential information protection process program 207c functions as a confidential information protection process 206c.

The process of the Agent process 206a corresponds to the process of the Agent 151. The process of the Proxy Agent process 206b corresponds to the process of the Proxy Agent 152. The process of the confidential information protection process 206c corresponds to the process of the confidential information protection processing unit 153.

Each of the programs 207a to 207c does not need to be stored in the hard disk device 207 from the beginning. For example, each of the programs may be stored in a "portable physical medium", for example, a flexible disk (FD), a CD-ROM, a DVD, a magneto-optic disk, or an IC card to be inserted into the computer 200. The computer 200 may read and execute each of the programs 207a to 207c.

A part of processes can be delegated to a Remote side without giving too much element information to estimate confidential information.

## Claims

1. An information processing apparatus comprising a controller (150) configured to:
generate, based on information exchanged between an internal Agent and an external Agent, a context graph where a plurality of elements in the information and relationships between the elements are represented by a graph structure;
identify unknown elements and known elements to the external Agent among elements of previously designated confidential information based on the context graph;
determine an anonymization range based on the unknown elements and the known elements to the external Agent; and
anonymize anonymization target information based on the anonymization range to generate anonymized information, and
transmit the anonymized information to the external Agent.

2. The information processing apparatus according to claim 1, wherein the controller (150) is further configured to generate a context graph of the internal Agent based on a message and an input document transmitted from the internal Agent to the external Agent, and generate a context graph of the external Agent based on a response message transmitted from the external Agent to the internal Agent.

3. The information processing apparatus according to claim 2, wherein the controller (150) is further configured to identify a common element that is known to the internal Agent and the external Agent based on the context graph of the internal Agent and the context graph of the external Agent, and identify remaining elements other than the common element among the elements of the confidential information as the unknown elements to the external Agent.

4. The information processing apparatus according to claim 3, wherein the controller (150) is further configured to identify an element other than the elements of the confidential information among the known elements to the external Agent, and determine a set of the identified element and the unknown elements to the external Agent as the anonymization range.

5. The information processing apparatus according to claim 3, wherein the controller (150) is further configured to evaluate whether or not the confidential information is leaked from the anonymized information based on the anonymized information and the confidential information, and adjust the anonymization range based on an evaluation result.

6. The information processing apparatus according to claim 5, wherein the controller (150) is further configured to add the elements of the confidential information to the anonymization range.

7. An anonymizing program causing a computer (200) to perform a process comprising:
generating, based on information exchanged between an internal Agent and an external Agent, a context graph where a plurality of elements in the information and relationships between the elements are represented by a graph structure;
identifying unknown elements and known elements to the external Agent among elements of previously designated confidential information based on the context graph;
determining an anonymization range based on the unknown elements and the known elements to the external Agent; and
anonymizing anonymization target information based on the anonymization range to generate anonymized information, and transmitting the anonymized information to the external Agent.

8. The anonymizing program according to claim 7, wherein the process further includes generating a context graph of the internal Agent based on a message and an input document transmitted from the internal Agent to the external Agent, and generating a context graph of the external Agent based on a response message transmitted from the external Agent to the internal Agent.

9. The anonymizing program according to claim 8, wherein the process further includes identifying a common element that is known to the internal Agent and the external Agent based on the context graph of the internal Agent and the context graph of the external Agent, and identifying remaining elements other than the common element among the elements of the confidential information as the unknown elements to the external Agent.

10. The anonymizing program according to claim 9, wherein the process further includes identifying an element other than the elements of the confidential information among the known elements to the external Agent, and determining a set of the identified element and the unknown elements to the external Agent as the anonymization range.

11. The anonymizing program according to claim 9, wherein the process further includes evaluating whether or not the confidential information is leaked from the anonymized information based on the anonymized information and the confidential information, and adjusting the anonymization range based on an evaluation result.

12. The anonymizing program according to claim 11, wherein the process further includes adding the elements of the confidential information to the anonymization range.

13. An anonymizing method carried out by a computer (200) comprising:
generating, based on information exchanged between an internal Agent and an external Agent, a context graph where a plurality of elements in the information and relationships between the elements are represented by a graph structure;
identifying unknown elements and known elements to the external Agent among elements of previously designated confidential information based on the context graph;
determining an anonymization range based on the unknown elements and the known elements to the external Agent; and
anonymizing anonymization target information based on the anonymization range to generate anonymized information, and transmitting the anonymized information to the external Agent.

14. The anonymizing method according to claim 13, further including generating a context graph of the internal Agent based on a message and an input document transmitted from the internal Agent to the external Agent, and generating context graph of the external Agent based on a response message transmitted from the external Agent to the internal Agent.

15. The anonymizing method according to claim 14, further including identifying a common element that is known to the internal Agent and the external Agent based on the context graph of the internal Agent and the context graph of the external Agent, and identifying remaining elements other than the common element among the elements of the confidential information as the unknown elements to the external Agent.

16. The anonymizing method according to claim 15, further including identifying an element other than the elements of the confidential information among the known elements to the external Agent, and determining a set of the identified element and the unknown elements to the external Agent as the anonymization range.

17. The anonymizing method according to claim 15, further including evaluating whether or not the confidential information is leaked from the anonymized information based on the anonymized information and the confidential information, and adjusting the anonymization range based on an evaluation result.

18. The anonymizing method according to claim 17, further including adding the elements of the confidential information to the anonymization range.
